# EUROPÄISCHE PATENTSCHRIFT

(11) **EP 3 670 125 B1**
(45) Veröffentlichungstag und Bekanntmachung des Hinweises auf die Patenterteilung: **04.10.2023**
(21) Anmeldenummer: 19213177.9
(22) Anmeldetag: 03.12.2019
(51) Int. Cl.: B28B 7/00, B29C 67/24, B28B 15/00

(54) **UNTERLAGSPLATTE**
PRODUCTION PALLET
PALLETTE DE PRODUCTION

(30) Priorität: 17.12.2018 AT 511242018
(43) Veröffentlichungstag der Anmeldung: 24.06.2020
(73) Patentinhaber: Semmelrock International GmbH, 1100 Wien (AT)
(72) Erfinder: WOLTRON, Günter, 2340 Mödling (AT)
(74) Vertreter: Gibler & Poth Patentanwälte KG

(56) Entgegenhaltungen:
- DE-A1- 4 040 905
- DE-T1- 19 581 927
- DE-U- 1 997 277
- REINHOLD MANNEL: "Increasing use of RFID technology for production boards RFID bei Unterlagsplatten auf dem Vormarsch", BFT INTERNATIONAL, BAUVERLAG, GUTERSLOH, DE, Bd. 80, Nr. 4, 1. April 2014 (2014-04-01), Seiten 26-35, XP001590035, ISSN: 0373-4331

## Beschreibung

Die Erfindung betrifft eine Unterlagsplatte als Bodenplatte zum Zusammenwirken mit wenigstens einer Betonsteinform in einer Formmaschine gemäß dem Oberbegriff des Patentanspruches 1.

Unterlagsplatten sind üblicherweise planebene, rechtwinkelige Platten in anwendungsspezifisch unterschiedlichen Größen, die in Formanlagen zur Herstellung von Betonerzeugnissen zum Einsatz kommen. In der Regel werden die Unterlagsplatten mittels einer Fördereinrichtung einer Formmaschine zugeführt. Anschließend werden die den Betonerzeugnissen entsprechenden Formen auf die Unterlagsplatten aufgesetzt und mit Beton befüllt. Danach und/oder während der Befüllung der Formen wird der zu verdichtende Beton mittels einer Rütteleinrichtung mit hohen Frequenzen gerüttelt. In der Regel wird zusätzlich zu dem Rütteln der zu verdichtende Beton mittels beispielsweise eines Stempels gepresst. Nach dem Verdichten des Betons werden die Formen entfernt und die auf den Unterlagsplatten befindlichen Betonerzeugnisse werden in einem Erhärtungsbereich erhärtet. Nach Erreichung der notwendigen Produktfestigkeiten werden die Unterlagsplatten mit den sich weiterhin darauf befindlichen Betonprodukten aus dem Erhärtungsbereich transportiert, die Betonprodukte werden von den Unterlagsplatten gelöst und abgehoben. Die Unterlagsplatten werden nachfolgend gereinigt und zur Wiederverwendung in der Formmaschine bereitgestellt.

Im Zuge des Formgebungsprozesses treten prozessbedingt statische und dynamische Belastungen auf den Unterlagsplatten auf. Unterlagsplatten sind in der Betonsteinfertigung weiters wechselnden Temperatur- und Feuchtebedingungen ausgesetzt. Einerseits im Zuge des Formgebungsprozesses, also bezüglich den Bedingungen in der Fertigungsanlage und andererseits während der Lagerung und Erhärtung der Betonprodukte und somit den Bedingungen im Erhärtungsbereich. Durch die kontinuierliche Wiederverwendung der Platten kommt es somit zu einer zyklisch variierenden Belastung der Platten hinsichtlich der Umgebungstemperatur- und feuchte. Dieser Zyklus wird zusätzlich durch Betriebsstillstände und dergleichen unterbrochen. Es ist bei längeren Betriebsunterbrechungen teils branchenüblich oder auch aus Gründen des Platzbedarfs notwendig, die Unterlagsplatten gestapelt im Freien zu lagern. Somit ist eine erhöhte Feuchte- und Temperaturwiderstandsfähigkeit der Unterlagsplatten ein wichtiges Kriterium für deren Langlebigkeit.

Unterlagsplatten, die als Bodenplatte zum Zusammenwirken mit wenigstens einer Betonsteinform in einer Formmaschine ausgebildet sind, bestehen in der Regel aus Holz, Kunststoff oder Stahl.

Die DE 195 81 927 T1 zeigt eine Unterlagsplatte als Bodenplatte zum Zusammenwirken mit wenigstens einer Betonsteinform in einer Formmaschine umfassend einen Polymerzement und Zuschlagstoffe nach dem Oberbegriff des Anspruchs 1.

Die DE 40 40 905 A1 zeigt auch eine Unterlagsplatte als Bodenplatte zum Zusammenwirken mit wenigstens einer Betonsteinform in einer Formmaschine bestehend aus Recycling-Kunststoffmaterial mit einem hohen Anteil an thermoplastischen Kunststoffen.

Die DE 19 97 277 U zeigt eine Spannbetonplatte als Transport-, Fertigungs-, und Stapelunterlage umfassend Schwerbeton und Spanndraht.

Die Publikation von Reinhold Mannel :"Increasing use of RFID technology for production boards RFID bei Unterlagsplatten auf dem Vormarsch", BFT international, Bauverlag, Gutersloh, DE, Bd. 80, Nr. 4, 1. April 2014, Seiten 26-35 zeigt Unterlagsplatten aus Kiefer, Lärche, aus glasfaserverstärkten Kunststoffen oder eine Schicht-Konstruktion aus Holz mit Polyurethan.

Nachteilig an Unterlagsplatten aus Holz ist, dass es durch eine Veränderung des Feuchtegehaltes zu Formänderungen des Holzes durch Quellen beziehungsweise Schwinden kommt, welche Formänderungen die Ebenheit der Platten nachteilig verändern können.

Eine hohe Holzfeuchtigkeit kann darüber hinaus zu einer Aufweichung der Oberflächen der Unterlagsplatte führen, die wiederum zu einem erhöhten Oberflächenverschleiß führt. Im Falle längerdauernder, hoher Holzfeuchte ist mit einer Beeinträchtigung der Lebensdauer der Unterlagsplatte aufgrund von Fäulnis beziehungsweise durch den verstärkten Wuchs holzzerstörender Pilze zu rechnen. Unterlagsplatten aus Holz bedürfen daher im Produktionsbetrieb einer kontinuierlichen Überwachung und umfangreichen Pflege, um ihre Gebrauchstauglichkeit zu erhalten und sie sind für bestimmte Produktionsanlagen mit hoher Feuchteexposition nur eingeschränkt oder nicht geeignet. Zusätzlich ergeben sich bei Unterlagsplatten aus Holz rohstoffbedingt hohe Schwankungsbreiten betreffend der jeweiligen Plattendichte und den damit verbundenen mechanischen Eigenschaften. Weiters ist bei Holzplatten im Nutzungszeitraum alterungsbedingt mit einem Abfall der relevanten mechanischen Eigenschaften zu rechnen.

Nachteilig an Unterlagsplatten aus Kunststoff ist, dass diese hinsichtlich der mechanischen Belastbarkeit, insbesondere der Oberflächen, als empfindlich einzustufen sind. Daher ist es branchenüblich, die Oberflächen entsprechender Platten nach einer bestimmten Produktionszeit zu Schleifen, um Fehlstellen, Riefen und dergleichen zu beseitigen. Bei diesem kosten- und zeitintensiven Prozess kommt es bedingt durch den Materialabtrag jedoch zu einer Verschlechterung der mechanischen Eigenschaften der Platten. Die Strukturhomogenität der Unterlagsplatten und die damit verbundenen Eigenschaften von Unterlagsplatten aus Kunststoff können bei der Verwendung von hohen Recyclatanteilen entsprechend der spezifischen Zusammensetzung, insbesondere bei verschiedenen Produktionschargen, stark variieren. Weiters ist nachteilhaft, dass manche Kunststoffe zu UV-Licht induzierten Veränderungen neigen, was sich auf die mechanischen Eigenschaften der Platten auswirken kann. Ein weiterer Nachteil besteht bei Unterlagsplatten aus Kunststoff darin, dass die notwendige Biegesteifigkeit im Vergleich zu anderen Plattenwerkstoffen oft nur über erhöhte Plattenstärken erreichbar ist.

Nachteilig an Unterlagsplatten aus Stahl ist, dass durch die hohe Dichte des Werkstoffes Plattengewichte von mehr als 200 kg üblich sind. Durch das hohe Plattengewicht kommt es zu wesentlichen Beanspruchungen der entsprechenden Transport- und Lagervorrichtungen der Formanlagen und der Formmaschinen selbst. Die nutzbare Produktlast der Unterlagsplatten wird somit reduziert. Weiters führen Stahlplatten oftmals auch zu höherer Lärmentwicklung in der Produktion. Zusätzlich ist ein entsprechender Korrosionsschutz der Unterlagsplatten sicherzustellen, um Rostbildung und einen entsprechenden Rostübertrag auf die geformten Produkte zu vermeiden. Werkstoff- und pflegebedingt stellen Unterlagsplatten aus Stahl daher eine kapital-und pflegeintensive Lösung dar.

Aufgabe der Erfindung ist es daher eine Unterlagsplatte der eingangs genannten Art anzugeben, mit welcher die genannten Nachteile vermieden werden können, mit welcher eine Langlebigkeit der Unterlagsplatte bei geringem Wartungsaufwand erreicht wird, wobei die Beanspruchung der Transport- und Lagervorrichtungen in Formanlagen durch die Unterlagsplatte gering gehalten wird, wobei die Lebenszykluskosten reduziert werden.

Erfindungsgemäß wird dies durch die Merkmale des Patentanspruches 1 erreicht.

Dadurch ergibt sich der Vorteil, dass das Gewicht der Unterlagsplatte gegenüber Stahlplatten und gegenüber einigen Kunststoffplatten deutlich reduziert werden kann, wodurch Wartungskosten gespart werden und bei einem Austausch der Unterlagsplatten keine Anpassungen der Transport- und Lagervorrichtungen in Formanlagen notwendig sind. Weiters muss aufgrund des geringeren Gewichts der einzelnen Unterlagsplatten die nutzbare Produktlast der Unterlagsplatten nicht reduziert werden, wodurch die Effizienz der Formanlage erhöht wird.

Weiters weist die Unterlagsplatte eine geringe Temperatur- und Luftfeuchteempfindlichkeit, eine hohe Geometriestabilität, eine hohe Oberflächenhärte und damit verbunden eine hohe Kratzerresistenz, sowie einen hohen Widerstand gegen Schlag- und Druckbelastungen bei entsprechender Biegesteifigkeit auf, wodurch die Unterlagsplatte verschleißarm, pflegeleichter und langlebiger ist. Dadurch können hygrisch und thermisch bedingte Formänderungen beziehungsweise Oberflächenstrukturänderungen minimiert werden.

Weiters ist vorteilhaft, dass die Unterlagsplatte aufgrund ihrer Zusammensetzung und der damit erzielten Biegesteifigkeit sowohl statischer als auch dynamischer Beanspruchung, die bei der Herstellung von Betonsteinprodukten durch Rütteln oder Druck auftritt, längerfristig widerstehen kann. Aufgrund ihrer Komponenten ist die Unterlagsplatte weiters korrosionsbeständig und kann kostengünstig vor Ort hergestellt werden, wodurch Transportkosten gespart werden und somit keine beim Transport stets anfallende Schadstoffemission stattfindet.

Weiters betrifft die Erfindung ein Verfahren zur Herstellung von Betonerzeugnissen gemäß dem Patentanspruch 12.

Aufgabe der Erfindung ist es daher ein Verfahren der eingangs genannten Art anzugeben, mit welchem die genannten Nachteile vermieden werden können, mit welchem die Beanspruchung der Transport- und Lagervorrichtungen in Formanlagen durch die Unterlagsplatte gering gehalten wird.

Erfindungsgemäß wird dies durch die Merkmale des Patentanspruchs 12 erreicht.

Dadurch können die vorstehend geltend gemachten Vorteile erzielt werden.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform der Unterlagsplatte in Aufsicht und
Fig. 2 die bevorzugte Ausführungsform der Unterlagsplatte in Seitenansicht.

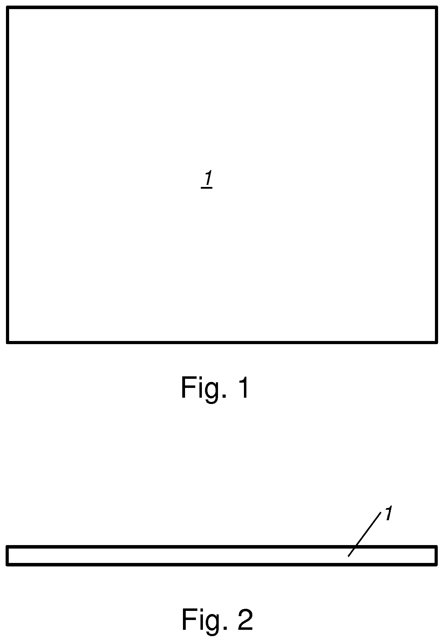

Die Fig. 1 und 2 zeigen eine bevorzugte Ausführungsform der Unterlagsplatte 1 als Bodenplatte zum Zusammenwirken mit wenigstens einer Betonsteinform in einer Formmaschine, wobei die Unterlagsplatte 1 im Wesentlichen aus einer gebundenen Betonmatrix umfassend wenigstens ein Bindemittel und Zuschlagskomponenten besteht. Eine Unterlagsplatte 1 ist eine insbesondere rechteckige Platte, die in Formanlagen, bevorzugt in Steinformanlagen, zur Herstellung, zum Transport und zur Lagerung von Betonerzeugnissen, insbesondere von Betonsteinen, verwendet wird. Eine Formmaschine ist ein Bestandteil einer Formanlage. Eine Formanlage umfasst neben der wenigstens einen Formmaschine in der Regel wenigstens eine Fördereinrichtung und einen Erhärtungsbereich, insbesondere ein Erhärtungsregal, um mehrere Unterlagsplatten 1 mit darauf befindlichen Betonerzeugnissen platzsparend zu erhärten sowie weitere Maschinen zur Betonsteinbearbeitung. Die Formmaschine ist insbesondere eine Steinformmaschine. Die Unterlagsplatte 1 wird mittels einer Fördereinrichtung der Formmaschine zugeführt und es werden die den Betonerzeugnissen entsprechenden Betonsteinformen auf die Unterlagsplatte 1 aufgesetzt und mit Beton befüllt. Die Unterlagsplatte 1 schließt demnach mit der Unterseite wenigstens einer Betonsteinform ab.

Durch die Auswahl entsprechender Zuschlagskomponenten lassen sich die mechanischen beziehungsweise physikalischen Eigenschaften der Unterlagsplatte 1 gezielt beeinflussen. Eine gebundene Betonmatrix umfassend Zuschlagskomponenten bedeutet, dass die Betonmatrix Zuschlagskomponenten enthält, wobei das Bindemittel den Beton mit den Zuschlagskomponenten verbindet.

Dadurch ergibt sich der Vorteil, dass das Gewicht der Unterlagsplatte 1 gegenüber Stahlplatten und gegenüber einigen Kunststoffplatten deutlich reduziert werden kann, wodurch Wartungskosten gespart werden und bei einem Austausch der Unterlagsplatten 1 keine Anpassungen der Transport- und Lagervorrichtungen in Formanlagen notwendig sind. Weiters muss aufgrund des geringeren Gewichts der einzelnen Unterlagsplatten 1 die nutzbare Produktlast der Unterlagsplatten 1 nicht reduziert werden, wodurch die Effizienz der Formanlage erhöht wird.

Weiters weist die Unterlagsplatte 1 eine geringe Temperatur- und Luftfeuchteempfindlichkeit, eine hohe Geometriestabilität, eine hohe Oberflächenhärte und damit verbunden eine hohe Kratzerresistenz, sowie einen hohen Widerstand gegen Schlag- und Druckbelastungen bei entsprechender Biegesteifigkeit auf, wodurch die Unterlagsplatte 1 verschleißarm, pflegeleichter und langlebiger ist. Dadurch können hygrisch und thermisch bedingte Formänderungen beziehungsweise Oberflächenstrukturänderungen minimiert werden.

Weiters ist vorteilhaft, dass die Unterlagsplatte 1 aufgrund ihrer Zusammensetzung und der damit erzielten Biegesteifigkeit sowohl statischer als auch dynamischer Beanspruchung, die bei der Herstellung von Betonsteinprodukten durch Rütteln oder Druck auftritt, längerfristig widerstehen kann. Aufgrund ihrer Komponenten ist die Unterlagsplatte 1 weiters korrosionsbeständig und kann kostengünstig vor Ort hergestellt werden, wodurch Transportkosten gespart werden und somit keine beim Transport stets anfallende Schadstoffemission stattfindet.

Es ist weiters die Verwendung einer Unterlagsplatte 1 zur Herstellung von Betonerzeugnissen vorgesehen.

Es ist weiters ein Verfahren zur Herstellung von Betonerzeugnissen vorgesehen, wobei wenigstens eine, im Wesentlichen aus einer gebundenen Betonmatrix umfassend wenigstens ein Bindemittel und Zuschlagskomponenten bestehende Unterlagsplatte 1 in eine Formmaschine geführt wird, wobei die Formmaschine wenigstens eine Betonsteinform umfasst, wobei die Betonsteinform in einem Positionierungsschritt auf der Unterlagsplatte 1 positioniert wird, wobei in einem Befüllungsschritt Beton, insbesondere Zementbeton, in die Betonsteinform gefüllt wird, wobei die gefüllte Betonsteinform in einem Verdichtungs- und Formgebungsschritt Rüttelenergie zugeführt wird, wobei nach erfolgter Formgebung die geformten Betonerzeugnisse, insbesondere Betonsteine, nachfolgend zum Aushärten in einen Erhärtungsbereich befördert werden, wobei die Betonerzeugnisse nach der Erhärtung von der Unterlagsplatte 1 gelöst und abgehoben werden.

Die Formmaschine ist insbesondere eine Betonsteinformmaschine, auch als Steinformmaschine bezeichnet, und dient zur Herstellung von Betonerzeugnissen, insbesondere von Betonsteinen. Vorzugsweise werden ein oder mehrere Unterlagsplatten 1 mittels einer Fördereinrichtung, beispielsweise einem Klinkenfördersystem, in die Formmaschine geführt. Die Formmaschine senkt wenigstens eine Betonsteinform auf die Oberfläche der Unterlagsplatte 1 ab, wodurch eine einseitig offene Pressform entsteht. Es kann diesbezüglich vorgesehen sein, dass die Betonsteinform auf der Unterlagsplatte 1 mechanisch fixiert wird, um ein Verrutschen der Betonsteinform während des Verdichtens des Betons zu vermeiden. Es kann weiters insbesondere vorgesehen sein, dass im Formgebungsschritt ein an einem Formoberteil befindlicher Stempel auf die gefüllte Betonsteinform drückt und den Beton verdichtet. Dieser Vorgang der Druckausübung des Stempels auf die offene beziehungsweise dem Stempel zugewandte Seite der befüllten Betonsteinform kann vorzugsweise während der Zufuhr von Rüttelenergie ausgeführt werden. Vorzugsweise wird der zu verdichtende Beton mittels einer Rütteleinrichtung mit hohen Frequenzen gerüttelt. Der Stempel schließt vorzugsweise an der Oberseite der Betonsteinform mit dem eingefüllten Beton flächig ab, um ein Austreten des Betons aus der Betonsteinform während des Rüttelns zu vermeiden.

Der Erhärtungsbereich kann eine offene oder geschlossene Kammer sein und weist ein oder mehrere Erhärtungsregale auf, in denen die Unterlagsplatten 1 samt Betonerzeugnissen in dafür vorgesehen Abschnitten übereinander gestapelt werden können, um Platz zu sparen. Für Betonerzeugnisse wird zur Begünstigung der Festigkeitsentwicklung im Erhärtungsbereich ein Raumklima mit hoher Luftfeuchtigkeit bis zu 100% relative Feuchtigkeit bei erhöhten Temperaturen mit bis zu 70 °C verwendet.

Die Unterlagsplatte 1 wird nach dem Ablösen der Betonerzeugnisse insbesondere mechanisch, zum Beispiel durch Abbürsten, gereinigt und bevorzugt zur Wiederverwendung in der Formmaschine bereitgestellt. Um das Ablösen der Betonprodukte von der Unterlagsplatte 1 zu erleichtern und die Reinigbarkeit der Unterlagsplatten 1 zu verbessern, kann vorgesehen sein, dass vor Wiederverwendung der Unterlagsplatte 1 die Applikation eines entsprechenden Trennmittels auf der Plattenoberfläche erfolgt. Ein Trennmittel, insbesondere ein hydrophobes Polymer wie beispielsweise Polymilchsäure (PLA), Polycaprolacton, Cellulosediacetat oder Polyhydroxybuttersäure, kann eine Hydrophobierung der Oberfläche bewirken.

Die Betonsteinform weist vorzugsweise mehrere einzelne Formwaben auf, welche die herzustellenden Betonsteine in Negativform abbilden, wodurch mehrere Betonerzeugnisse auf einmal erzeugt werden können.

Mit Oberfläche der Unterlagsplatte 1 kann die Oberfläche der Oberseite als auch die Oberfläche der Unterseite der Unterlagsplatte 1 gemeint sein, da diese Seiten bevorzugter Weise gleich sind beziehungsweise keine relevanten Unterschiede zueinander aufweisen.

Vorzugsweise kann vorgesehen sein, dass das wenigstens eine Bindemittel wenigstens eine organische Verbindung umfasst, wobei die wenigstens eine organische Verbindung insbesondere ein Duroplast und/oder ein Thermoplast und/oder ein Elastomer ist. Vorteilhaft an dem Zusatz wenigstens eines organischen Bindemittels sind eine gute Chemikalienbeständigkeit, eine porenarme Oberfläche und damit eine hohe Feuchtebeständigkeit, und eine hohe mechanische Festigkeit der Unterlagsplatte 1 bei ausreichender Elastizität.

Es kann bevorzugt vorgesehen sein, dass das wenigstens eine Bindemittel genau eine organische Verbindung umfasst.

Es kann aber auch vorgesehen sein, dass das wenigstens eine Bindemittel mehr als eine organische Verbindung umfasst.

Die wenigstens eine organische Verbindung kann vorzugsweise ein Duroplast, insbesondere ein Reaktionsharz und/oder ein Aminoplast und/oder ein Phenoplast, sein.

Es kann insbesondere vorgesehen sein, dass das wenigstens eine organische Bindemittel ein oder mehrere Reaktionsharze, insbesondere Epoxidharz, umfasst.

Insbesondere kann vorgesehen sein, dass die wenigstens eine organische Verbindung ein ungesättigtes Polyesterharz und/oder ein Polyurethan (PUR) und/oder ein Polyacrylat umfasst.

Die wenigstens eine organische Verbindung kann bevorzugt auch ein Thermoplast, insbesondere Polymethylmethacrylat (PMMA), sein.

Die wenigstens eine organische Verbindung kann bevorzugt auch ein Elastomer, insbesondere ein Kautschuk, sein.

Es kann auch vorgesehen sein, dass die wenigstens eine organische Verbindung ein thermoplastisches Elastomer, insbesondere ein Copolyester oder ein Polyether-Block-Amid, ist.

Es kann bevorzugt vorgesehen sein, dass das wenigstens eine organische Bindemittel nach Zugabe von Reaktionsmitteln wie Härtern oder Initiatoren aushärtet.

Es kann weiters bevorzugt vorgesehen sein, dass die Unterlagsplatte 1 homogen ist. Homogen bedeutet hierbei, dass die Komponenten der Unterlagsplatte 1 innerhalb der Unterlagsplatte 1 im makroskopischen Bereich im Wesentlichen gleich verteilt sind.

Es kann weiters vorgesehen sein, dass die Unterlagsplatte 1 frei von zusätzlichen Oberflächenbeschichtungen ist.

Um eine hohe Vernetzung beziehungsweise Bindung des Betons mit den Zuschlagkomponenten zu erzielen kann weiters vorgesehen sein, dass der Masseanteil des wenigstens einen Bindemittels in der Unterlagsplatte 1 4% bis 25%, insbesondere 5% bis 20%, besonders bevorzugt 10% bis 15%, beträgt.

Besonders bevorzugt kann vorgesehen sein, dass der Masseanteil der Zuschlagskomponenten in der Unterlagsplatte 1 mindestens 55%, insbesondere mindestens 65%, bevorzugt mindestens 75%, beträgt, wodurch die Herstellung kostengünstiger Unerlagsplatten 1 ermöglicht wird. Die Zuschlagskomponenten können natürlichen und/oder künstlichen Ursprungs sein. Aufgrund der Art und Menge der Zuschlagskomponenten können weiters das Gewicht und die mechanischen beziehungsweise physikalischen Eigenschaften der Unterlagsplatte 1 gezielt beeinflusst werden.

Erfindungsgemäß ist vorgesehen, dass der Masseanteil der Zuschlagskomponenten in der Unterlagsplatte 1 maximal 80%, insbesondere maximal 70%, beträgt.

Es kann weiters vorgesehen sein, dass die Zuschlagskomponenten mineralische Komponenten umfassen. Als mineralische Zuschlagskomponenten können unter anderem Mehle und/oder Körnungen mit verschiedenen Korngrößen verwendet werden, wodurch die Ausbildung einer Plattenoberfläche mit verbessertem Widerstand gegen mechanischen und insbesondere gegen abrasiven Verschleiß erreicht wird.

Um die Herstellungskosten der Unterlagsplatte 1 weiter zu senken kann besonders bevorzugt vorgesehen sein, dass die mineralischen Komponenten Recyclate mineralischer Baustoffe umfassen. Der Vorteil ist hierbei, dass einerseits Produktionskosten gespart werden und dass die Verwendung von Recyclaten andererseits ressourcenschonend und somit umweltfreundlich ist.

Zur Erzielung einer adäquaten Qualität der Unterseite der Betonprodukte wird weiters eine planebene und fehlstellenarme Plattenoberfläche gefordert. Die Oberflächen der Unterlagsplatten 1 werden im Zuge der Befüllung der Betonsteinformen, der Formgebung beziehungsweise Verdichtung, des Transportes, der Stapelung und der Reinigung mechanisch belastet. Um eine glatte Oberfläche der Unterlagsplatte 1 zu erzielen kann vorgesehen sein, dass die mineralischen Komponenten Körner mit Korngrößen von maximal 10 mm, insbesondere maximal 7 mm, bevorzugt maximal 4 mm, umfassen.

Durch die Verwendung von Zuschlagskomponenten ausgewählter Kornverteilung kann außerdem die Gefügedichtheit der Unterlagsplatte 1 verbessert werden.

Um die Widerstandskraft der Oberfläche der Unterlagsplatte 1 gegen mechanischen Verschleiß weiter zu erhöhen kann bevorzugt vorgesehen sein, dass die mineralischen Komponenten Hartgesteine, insbesondere Quarzite, Granite oder Basalte, umfassen, wodurch die Oberflächenhärte der Unterlagsplatte 1 erhöht wird und die Unterlagsplatte 1 daraus resultierend einen möglichst hohen Widerstand gegen Schlag- und Prallbelastungen, gegen das Eindrücken von Fremdkörpern wie beispielsweise Betonbestandteilen und gegen eine schabende Beanspruchung an der Oberfläche erzielt wird.

Zur Verbesserung der Trennfähigkeit der Betonsteinprodukte von der Oberfläche der Unterlagsplatte 1 kann die Oberfläche zusätzlich beschichtet bzw. imprägniert sein.

Da das Gewicht von Unterlagsplatten 1 ein wichtiger Faktor für Formanlagen, insbesondere für die Transport- und Lagervorrichtungen ist, ist erfindungsgemäß vorgesehen, dass die Unterlagsplatte 1 zusätzlich zu den Zuschlagskomponenten Leichtzuschlagkomponenten mit einem Masseanteil von maximal 20% umfasst. Durch den Zusatz von Leichtzuschlagskomponenten wie Blähperlit, Blähglas, Blähton, Ziegelsplitt, Schaumlava, Schaumschlacke, Bims, Holzwolle, Holzspäne oder von geschäumten Kunststoffen lässt sich das spezifische Raumgewicht der Betonmatrix zielgerichtet beeinflussen.

Die Unterlagsplatte 1 kann vorzugsweise eine Breite von 70 cm bis 200 cm, insbesondere 100 cm bis 150 cm, aufweisen.

Die Unterlagsplatte 1 kann vorzugsweise eine Länge von 70 cm bis 200 cm, insbesondere 90 cm bis 150 cm, aufweisen.

Die Unterlagsplatte 1 kann vorzugsweise eine Höhe von 1 cm bis 10 cm, insbesondere 4 cm bis 6 cm, aufweisen.

Die Unterlagsplatten 1 sind bei Transport und Lagerung üblicher Weise an zwei parallelen Seiten gelagert. Durch die Produktbelastung, die sich bei der Betonsteinfertigung in der Regel im Bereich bis zu 800 kg und in Ausnahmefällen auch darüber bewegen kann, kommt es zu einer entsprechenden statischen Beanspruchung der Unterlagsplatten 1, insbesondere auf Biegung. Die erlaubte Durchbiegung der Platten unter dieser Beanspruchung ist limitiert, da sich die durch die Durchbiegung ergebende gekrümmte Plattenoberfläche auf der Unterseite der direkt nach der Formgebung noch plastisch verformbaren Betonprodukte abbildet, was zu unerwünschten Geometrieabweichungen und/oder Rissbildungen in den Betonprodukten führt.

Um eine elastische aber dennoch entsprechend Biegesteife Unterlagsplatte 1 zu ermöglichen, ist diesbezüglich erfindungsgemäß vorgesehen, dass die Unterlagsplatte 1 einen Elastizitätsmodul für eine Biegebeanspruchung von maximal 18000 MPa, insbesondere maximal 15000 MPa, besonders bevorzugt maximal 12000 MPa, aufweist. Der Elastizitätsmodul kann insbesondere mindestens 6000MPA sein. Die genannten Elastizitätswerte beziehen sich auf eine Messung bei Raumtemperatur. Diese Werte sind für Polymerbetone unüblich gering. Im speziellen Anlassfall ist ein unüblich geringer Elastizitätsmodul für eine Betonplatte als Unterlagsplatte 1 gewünscht. Für andere Einsatzzwecke von Polymerbetonen ist der Elastizitätsmodul wesentlich höher. Der Elastizitätsmodul für eine Biegebeanspruchung wird durch die Zusammensetzung der Unterlagsplatte 1 zielgerichtet beeinflusst. Gegenüber herkömmlichen Zementbetonen oder auch Polymerbetonen wird somit eine deutliche Absenkung des Elastizitätsmoduls erreicht. Dadurch wird verhindert, dass bei maschinenbedingten Zwangsverformungen der Platte die Plattenfestigkeit überschritten wird.

In der Regel kann der Elastizitätsmodul auf unterschiedliche Weise ermittelt werden, für Kunststoffe beispielsweise als Sekantenmodul mittels eines Zug-, Biege- und Druckversuchs unter Nutzung einer Universalprüfmaschine, mittels DMA und DMTA unter Zugbeanspruchung oder mittels Ultraschallprüfung.

Vorzugsweise kann der Elastizitätsmodul der Unterlagsplatte 1 nach DIN 1048-5 als Sehnenmodul oder nach DIN EN 12390-13 als Sekantenmodul ermittelt werden.

Zur Bestimmung der Biegefestigkeit und des Elastizitätsmoduls kann insbesondere eine Probe mit folgenden Maßen herangezogen werden: Breite: 140 cm, Länge: 110 cm, Höhe: 5 cm.

Es kann bevorzugt vorgesehen sein, dass die Unterlagsplatte 1 Bewehrungskomponenten aufweist. Mittels der Bewehrungskomponenten wird die Widerstandskraft der Unterlagsplatte 1 bei statischer und/oder dynamischer Beanspruchung erhöht, welche Beanspruchung sich durch Biegung der Unterlagsplatte 1 über eine ihrer Achsen bei beispielsweise Transport und Lagerung in einem Erhärtungsregal ergibt. Diese Bewehrungskomponenten können gerichtet und/oder ungerichtet sein.

Gerichtete Bewehrungskomponenten bestehen beispielsweise aus Stahl, Glas-, Basalt-, Carbon-, Holz-, Hanf-, Cellulose-, oder anderen Textilfasern und sind insbesondere in Form von Stäben, Gittern, Matten, Netzen oder Gewirken ausgebildet.

Ungerichtete Bewehrungskomponenten sind beispielweise aus Stahl-, Glas-, Basalt-, Carbon-, Kunststoff- oder anderen Fasern wie Textilfasern in Form von Fasern.

Bevorzugt kann vorgesehen sein, dass die Unterlagsplatte 1 eine Trockenrohdichte im Bereich von 600 kg/m³ bis 2000 kg/m³, insbesondere im Bereich von 800 kg/m³ bis 1400 kg/m³, aufweist. Die Verwendung von Leichtzuschlagskomponenten ermöglicht daher unter anderem die Erzielung von Betonmatrixraumgewichten im Bereich der Leichtbetone von 600 kg/m³ bis 2.000 kg/m³, insbesondere im Bereich von 800 kg/m³ bis 1.400 kg/m³, wodurch die Unterlagsplatte 1 ein wesentlich geringeres Gewicht als beispielsweise eine Unterlagsplatte 1 aus Stahl aufweist und die zuvor beschriebenen Nachteile vermieden werden.

## Patentansprüche

1. Unterlagsplatte (1) als Bodenplatte zum Zusammenwirken mit wenigstens einer Betonsteinform in einer Formmaschine, wobei die Unterlagsplatte (1) im Wesentlichen aus einer gebundenen Betonmatrix umfassend wenigstens ein Bindemittel und Zuschlagskomponenten besteht, **dadurch gekennzeichnet, dass** der Masseanteil der Zuschlagskomponenten in der Unterlagsplatte (1) maximal 80% beträgt, dass die Unterlagsplatte (1) zusätzlich zu den Zuschlagskomponenten Leichtzuschlagkomponenten mit einem Masseanteil von maximal 20% umfasst und dass die Unterlagsplatte (1) einen Elastizitätsmodul für eine Biegebeanspruchung von maximal 18000 MPa aufweist.

2. Unterlagsplatte (1) nach Anspruch 1, **dadurch gekennzeichnet, dass** das wenigstens eine Bindemittel wenigstens eine organische Verbindung umfasst, wobei die wenigstens eine organische Verbindung insbesondere ein Duroplast und/oder ein Thermoplast und/oder ein Elastomer ist.

3. Unterlagsplatte (1) nach Anspruch 1 oder 2, **dadurch gekennzeichnet, dass** der Masseanteil des wenigstens einen Bindemittels in der Unterlagsplatte (1) 4% bis 25%, insbesondere 5% bis 20%, besonders bevorzugt 10% bis 15%, beträgt.

4. Unterlagsplatte (1) nach einem der Ansprüche 1 bis 3, **dadurch gekennzeichnet, dass** der Masseanteil der Zuschlagskomponenten in der Unterlagsplatte (1) mindestens 55%, insbesondere mindestens 65%, bevorzugt mindestens 75%, beträgt.

5. Unterlagsplatte (1) nach einem der Ansprüche 1 bis 4, **dadurch gekennzeichnet, dass** die Zuschlagskomponenten mineralische Komponenten umfassen.

6. Unterlagsplatte (1) nach Anspruch 5, **dadurch gekennzeichnet, dass** die mineralischen Komponenten Hartgesteine, insbesondere Quarzite, Granite oder Basalte, umfassen.

7. Unterlagsplatte (1) nach Anspruch 5, **dadurch gekennzeichnet, dass** die mineralischen Komponenten Recyclate mineralischer Baustoffe umfassen.

8. Unterlagsplatte (1) nach einem der Ansprüche 5 bis 7, **dadurch gekennzeichnet, dass** die mineralischen Komponenten Körner mit Korngrößen von maximal 10 mm, insbesondere maximal 7 mm, bevorzugt maximal 4 mm, umfassen.

9. Unterlagsplatte (1) nach einem der Ansprüche 1 bis 8, **dadurch gekennzeichnet, dass** die Unterlagsplatte (1) einen Elastizitätsmodul für eine Biegebeanspruchung von maximal 15000 MPa, besonders bevorzugt maximal 12000 MPa, aufweist.

10. Unterlagsplatte (1) nach einem der Ansprüche 1 bis 9, **dadurch gekennzeichnet, dass** die Unterlagsplatte (1) eine Trockenrohdichte im Bereich von 600 kg/m³ bis 2000 kg/m³, insbesondere im Bereich von 800 kg/m³ bis 1400 kg/m³, aufweist.

11. Unterlagsplatte (1) nach einem der Ansprüche 1 bis 10, **dadurch gekennzeichnet, dass** die Unterlagsplatte (1) Bewehrungskomponenten umfasst.

12. Verfahren zur Herstellung von Betonerzeugnissen, wobei wenigstens eine, im Wesentlichen aus einer gebundenen Betonmatrix umfassend wenigstens ein Bindemittel und Zuschlagskomponenten bestehende Unterlagsplatte (1) nach einem der Ansprüche 1 bis 11, in eine Formmaschine geführt wird, wobei die Formmaschine wenigstens eine Betonsteinform umfasst, wobei die Betonsteinform in einem Positionierungsschritt auf der Unterlagsplatte (1) positioniert wird, wobei in einem Befüllungsschritt Beton, insbesondere Zementbeton, in die Betonsteinform gefüllt wird, wobei die gefüllte Betonsteinform in einem Verdichtungs- und Formgebungsschritt Rüttelenergie zugeführt wird, wobei nach erfolgter Formgebung die geformten Betonerzeugnisse, insbesondere Betonsteine, nachfolgend zum Aushärten in einen Erhärtungsbereich befördert werden, wobei die Betonerzeugnisse nach der Trocknung von der Unterlagsplatte (1) gelöst und abgehoben werden.

## Claims

1. Base plate (1) as a floor plate for cooperating with at least one concrete block mould in a moulding machine, whereby the base plate (1) essentially consists of a bonded concrete matrix comprising at least one binder and aggregate components, **characterised in that** the mass proportion of the aggregate components in the base plate (1) is at most 80%, **in that** the mass proportion of the aggregate components in the base plate (1) is at most 80%, **in that** the base plate (1) comprises, in addition to the aggregate components, lightweight aggregate components with a mass proportion of at most 20%, and **in that** the base plate (1) has a modulus of elasticity for a bending stress of at most 18000 MPa.

2. Base plate (1) according to claim 1, **characterised in that** the at least one binder comprises at least one organic compound, wherein the at least one organic compound is in particular a thermoset and/or a thermoplastic and/or an elastomer.

3. Base plate (1) according to claim 1 or 2, **characterised in that** the mass proportion of the at least one binder in the base plate (1) is 4% to 25%, in particular 5% to 20%, particularly preferably 10% to 15%.

4. Base plate (1) according to one of the claims 1 to 3, **characterised in that** the mass proportion of the aggregate components in the base plate (1) is at least 55%, in particular at least 65%, preferably at least 75%.

5. Base plate (1) according to any of claims 1 to 4, **characterised in that** the aggregate components comprise mineral components.

6. Base plate (1) according to claim 5, **characterised in that** the mineral components comprise hard rocks, in particular quartzites, granites or basalts.

7. Base plate (1) according to claim 5, **characterised in that** the mineral components comprise recyclates of mineral building materials.

8. Base plate (1) according to one of claims 5 to 7, **characterised in that** the mineral components comprise grains with grain sizes of at most 10 mm, in particular at most 7 mm, preferably at most 4 mm.

9. Base plate (1) according to one of claims 1 to 8, **characterised in that** the base plate (1) has a modulus of elasticity for a bending stress of at most 15000 MPa, particularly preferably at most 12000 MPa.

10. Base plate (1) according to one of claims 1 to 9, **characterised in that** the base plate (1) has a dry bulk density in the range from 600 kg/m³ to 2000 kg/m³, in particular in the range from 800 kg/m³ to 1400 kg/m³.

11. Base plate (1) according to any one of claims 1 to 10, **characterised in that** the base plate (1) comprises reinforcement components.

12. Method for producing concrete products, wherein at least one base plate (1) essentially consisting of a bound concrete matrix comprising at least one binder and aggregate components according to one of claims 1 to 11 is guided into a moulding machine, wherein the moulding machine comprises at least one concrete block mould, wherein the concrete block mould is positioned on the base plate (1) in a positioning step, wherein concrete, in particular cement concrete, is filled into the concrete block mould in a filling step, wherein the filled concrete block mould is supplied with vibrating energy in a compacting and shaping step, wherein after shaping has taken place the shaped concrete products, in particular concrete blocks, are subsequently conveyed into a hardening region for hardening, wherein the concrete products are released from the base plate (1) after drying and are lifted off.

## Revendications

1. Plaque d'assise (1) en tant que plaque de fond pour coopérer avec au moins un moule pour blocs de béton dans une machine à mouler, la plaque d'assise (1) étant essentiellement constituée d'une matrice de béton liée comprenant au moins un liant et des composants d'agrégats, **caractérisée en ce que** la plaque d'assise (1) est constituée d'une matrice de béton liée, **en ce que** la part de masse des composants d'agrégat dans la plaque d'assise (1) est de 80% au maximum, **en ce que** la plaque d'assise (1) comprend, en plus des composants d'agrégat, des composants d'agrégat léger avec une part de masse de 20% au maximum et **en ce que** la plaque d'assise (1) présente un module d'élasticité pour une sollicitation en flexion de 18000 MPa au maximum.

2. Plaque d'appui (1) selon la revendication 1, **caractérisée en ce que** ledit au moins un liant comprend au moins un composé organique, ledit au moins un composé organique étant notamment un thermodurcissable et/ou un thermoplastique et/ou un élastomère.

3. Plaque d'appui (1) selon la revendication 1 ou 2, **caractérisée en ce que** la proportion en masse dudit au moins un liant dans la plaque d'appui (1) est de 4% à 25%, en particulier de 5% à 20%, de manière particulièrement préférée de 10% à 15%.

4. Plaque de support (1) selon l'une des revendications 1 à 3, **caractérisée en ce que** la proportion en masse des composants d'agrégat dans la plaque de support (1) est d'au moins 55%, en particulier d'au moins 65%, de préférence d'au moins 75%.

5. Plaque de support (1) selon l'une des revendications 1 à 4, **caractérisée en ce que** les composants d'agrégat comprennent des composants minéraux.

6. Plaque de support (1) selon la revendication 5, **caractérisée en ce que** les composants minéraux comprennent des roches dures, en particulier des quartzites, des granites ou des basaltes.

7. Plaque de support (1) selon la revendication 5, **caractérisée en ce que** les composants minéraux comprennent des recyclats de matériaux de construction minéraux.

8. Plaque de support (1) selon l'une des revendications 5 à 7, **caractérisée en ce que** les composants minéraux comprennent des grains ayant une granulométrie maximale de 10 mm, en particulier maximale de 7 mm, de préférence maximale de 4 mm.

9. Plaque d'appui (1) selon l'une des revendications 1 à 8, **caractérisée en ce que** la plaque d'appui (1) présente un module d'élasticité pour une sollicitation en flexion d'au plus 15000 MPa, de préférence d'au plus 12000 MPa.

10. Plaque de support (1) selon l'une des revendications 1 à 9, **caractérisée en ce que** la plaque de support (1) présente une masse volumique apparente à sec comprise entre 600 kg/m³ et 2000 kg/m³, en particulier entre 800 kg/m³ et 1400 kg/m³.

11. Plaque de support (1) selon l'une quelconque des revendications 1 à 10, **caractérisée en ce que** la plaque de support (1) comprend des composants d'armature.

12. Procédé de fabrication de produits en béton, dans lequel au moins une plaque d'assise (1) selon l'une des revendications 1 à 11, constituée essentiellement d'une matrice de béton liée comprenant au moins un liant et des composants d'agrégats, est introduite dans une machine de moulage, la machine de moulage comprenant au moins un moule à blocs de béton, le moule à blocs de béton étant positionné sur la plaque d'assise (1) dans une étape de positionnement, dans une étape de remplissage, du béton, en particulier du béton de ciment, est rempli dans le moule à blocs de béton, dans une étape de compactage et de mise en forme, le moule à blocs de béton rempli est alimenté en énergie de vibration, une fois la mise en forme effectuée, les produits en béton mis en forme, en particulier les blocs de béton, sont ensuite transportés dans une zone de durcissement pour durcir, les produits en béton étant détachés de la plaque d'appui (1) et soulevés après le séchage.
